# FASCICULE DE BREVET EUROPEEN

(11) **EP 0 481 875 B1**
(45) Date de publication et mention de la délivrance du brevet: **30.08.1995**
(21) Numéro de dépôt: 91402748.7
(22) Date de dépôt: 15.10.1991
(51) Int. Cl.: G11B 15/12

(54) **Procédé d'adressage de têtes élémentaires d'une tête multipiste d'enregistrement sur support magnétique, et tête magnétique le mettant en oeuvre**
Verfahren zur Adressierung von elementaren Köpfen eines magnetischen Aufnahme-Mehrspurkopfes und Magnetkopf zur Durchführung des Verfahrens
Method for addressing elementary heads from a magnetic multitrack recording head and head using this method

(30) Priorité: 19.10.1990 FR 9012956
(43) Date de publication de la demande: 22.04.1992
(73) Titulaire: THOMSON multimedia, 92400 Courbevoie (FR)
(72) Inventeur: Burklin, Helmut, F-92045 Paris la Défense (FR); De Vito, Mario, F-92045 Paris la Défense (FR)
(74) Mandataire: Ruellan-Lemonnier, Brigitte

(56) Documents cités:
- EP-A- 0 097 836
- EP-A- 0 340 085
- WO-A-87/00959

## Description

La présente invention se rapporte à un procédé d'adressage de têtes élémentaires d'une tête multipiste d'enregistrement sur support magnétique.

On connaît une tête magnétique multipiste, à disposition matricielle des têtes élémentaires, par exemple d'après le document EP-A-0 340 085. Une telle tête fonctionne en régime sensiblement linéaire, c'est-a-dire que le champ que chaque tête élémentaire crée au niveau de son entrefer est pratiquement proportionnel à la somme des courants d'excitation de cette tête (courant de ligne et/ou de colonne). Le point de fonctionnement de chaque tête élémentaire est choisi de façon que le champ coercitif h_{c} de la bande magnétique sur laquelle la tête enregistre des informations se situe entre les champs h/3 et h créés par la tête pour des courants d'excitation de valeurs respectives I/3 et I, le courant I étant le courant maximal d'excitation.

Le signal de colonne est soit une impulsion bipolaire d'amplitude 2I/3 sélectionnant toute la colonne de têtes élémentaires correspondantes, soit un signai d'amplitude nulle pour ne pas sélectionner cette colonne. Le signal d'écriture de ligne est nécessairement une impulsion de largeur supérieure à celle de l'impulsion bipolaire, et ce signal d'écriture a une amplitude +I/3 (pour écrire +1) ou -I/3 (pour écrire -1).

Dans une telle tête connue, le signal de sélection d'une colonne seule peut écrire un état intermédiaire indéfini sur le support magnétique. Les signaux de ligne envoyés sur toutes les cellules de la colonne sélectionnée permettent de définir l'état magnétique à enregistrer mais imposent ainsi une écriture par toutes ces cellules.

La présente invention a pour objet un procédé d'adressage de têtes élémentaires d'une tête matricielle d'enregistrement sur support magnétique adressée par un réseau de conducteurs disposés en lignes et en colonnes, utilisant d'une part un signal de sélection de colonne comportant deux impulsions successives de même amplitude d'environ 2I/3, I étant le courant d'excitation maximal des circuits magnétiques des têtes élémentaires, mais de polarités inverses, ledit procédé utilisant d'autre part des signaux de sélection de ligne comprenant chacun un palier d'amplitude d'environ I/3 existant au moins pendant la durée des impulsions du signal de sélection de colonne, la polarité desdites impulsions de sélection ligne dépendant de l'information à inscrire, ledit procédé étant caractérisé en ce que les lignes non sélectionnées reçoivent un signal comprenant deux impulsions successives d'amplitude d'environ I/3 et de polarités inverses, chacune de ces impulsions étant associée à une impulsion du signal de sélection de colonne (a), la durée et la polarité desdites impulsions du signal des lignes non sélectionnées étant telles que la somme dudit signal de sélection de colonne et du signal des lignes non sélectionnées ne dépasse pas environ I/3 en valeur absolue.

La présente invention sera mieux comprise à la lecture de la description détaillée d'un mode de réalisation, puis à titre d'exemple non limitatif, et illustré par le dessin annexé, sur lequel :
- la figure 1 est un chronogramme de signaux d'adressage selon l'art antérieur, et
- la figure 2 est un chronogramme de signaux d'adressage selon la présente invention.

L'invention part d'une tête magnétique d'enregistrement multipiste. Cette tête est du type matriciel à rangées et colonnes de têtes magnétiques élémentaires adressées par un réseau de conducteurs électriques également disposés en lignes et colonnes. Chaque tête magnétique élémentaire comporte un circuit magnétique élémentaire à très faible entrefer (largeur de l'ordre de grandeur du micromètre). A chaque intersection de conducteurs électriques de lianes et de colonnes correspond un circuit magnétique élémentaire. I étant le courant maximal d'excitation d'une tête magnétique élémentaire en régime linéaire, il faut et il suffit, comme précisé ci-dessus, que la somme du courant d'un fil de colonne et du courant d'un fil de ligne soit supérieure à environ +2I/3 pour que le support magnétique devant la tête élémentaire située à l'intersection de ces deux fils passe à l'état +1, et que cette somme soit inférieure à environ -2I/3 pour que le support magnétique passe à l'état -1. Entre ces deux bornes, le support ne change pas d'état (fonction "mémoire" du support magnétique).

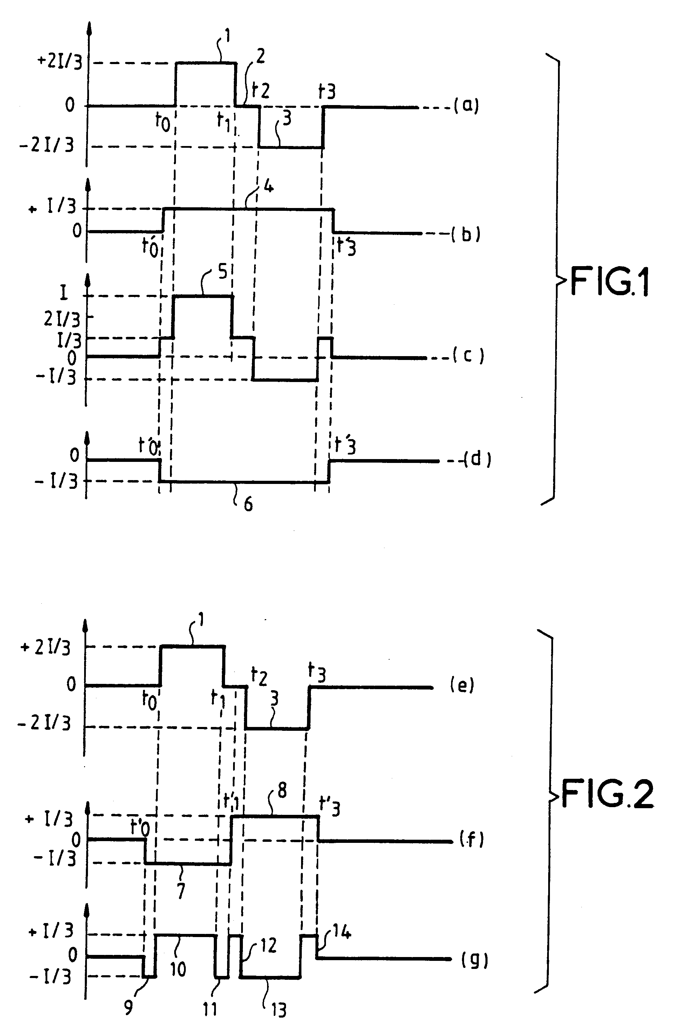

On a représenté en (a) sur la figure 1 une impulsion double (impulsion bipolaire) de sélection de colonne. Cette impulsion double comporte, entre les temps t0 et t1 une première impulsion simple 1 d'amplitude +2I/3, puis un palier 2 de valeur nulle (entre t1 et t2), et une deuxième impulsion simple 3 (entre t2 et t3) d'amplitude -2I/3. On a représenté en (b) une impulsion 4 de ligne écrivant +1 dans la tête élémentaire correspondante. Cette impulsion 4 d'amplitude +I/3 "recouvre" l'impulsion double, c'est-à-dire que son front montant arrive au temps t′0 légèrement avant t0, et que son front descendant arrive au temps t′3 légèrement après t′3.

On a représenté en (c) le signal résultant d'adressage de la tête élémentaire. Ce signal est la somme des signaux (a) et (b). Avant t′0, il est nul. De t′0 à t0, il est égal à +I/3. Entre t0 et t1 il est égal à +I. De t1 à t2, il est égal à +I/3, de t2 à t3, il est égal à -I/3, et de t3 à t′3, il est égal à +I/3, pour revenir à zéro après t′3. Seule la partie 5 de ce signal résultant, d'amplitude I (donc supérieure à +2I/3), et comprise entre t0 et t1, est active, et permet d'inscrire une information (correspondant à +1) sur le support magnétique qu'enregistre la tête.

De façon similaire, l'impulsion 6, représentée en (d), d'amplitude -I/3, est comprise entre t′0 et t′3 et écrit -1 dans la tête élémentaire correspondante. Le signal (non représenté) résultant de l'addition de (a) et de (d) se construit de la même façon que (c), et comporte une seule partie active, entre t2 et t3, d'amplitude -I.

Bien entendu, lorsque le signal de colonne est nul, le support magnétique ne peut être enregistré, car ni le signal (b), ni le signal (d) n'a une amplitude suffisante (+I/3 ou -I/3) pour enregistrer ce support.

Selon l'invention, le signal de sélection de colonne (e) (figure 2) est identique au signal (a) et les signaux d'écriture de lignes sont toujours les signaux (b) pour écrire +1 et (d) pour écrire -1.

Par contre, pour ne pas sélectionner une ligne, on envoie sur cette ligne un signal tel que le signal (f) de la figure 2. Ce signal (f) est une impulsion double, bipolaire, "recouvrant" le signal de sélection de colonne. Le signal (f) comporte une première impulsion simple 7 d'amplitude -I/3, dont le front montant arrive à l'instant t′0, comme c'est le cas pour les signaux (b) et (d). Cette impulsion 7 se termine à l'instant t′1 situé entre t1 et t2, par exemple au milieu du laps de temps t1-t2. En général, la durée de ce laps de temps est comprise entre quelques nanosecondes et quelques dizaines de nanosecondes, et il en est généralement de même pour les laps de temps t′0-t0 et t3-t′3. Au même instant t′1 débute la seconde impulsion simple 8, qui se termine à l'instant t′3 dont l'amplitude est +I/3.

L'addition des signaux (e) et (f) donne le signal (g) représenté à la dernière ligne de la figure 2. Ce signal (g) comporte : une brève impulsion négative 9 entre t′0 et t0, une impulsion positive 10 entre t0 et t1, une brève impulsion négative 11 entre t1 et t′1, une brève impulsion positive 12 entre t′1 et t2, une impulsion négative 13 entre t2 et t3, et une brève impulsion positive 14 entre t3 et t′3. Les valeurs absolues de toutes ces impulsions sont toutes égales à I/3. Par conséquent, ce signal (g) ne peut rien écrire.

Dans certains cas, le signal (e) peut ne pas comporter de palier nul entre t1 et t2, et dans ce cas, la transition entre les impulsions 7 et 8 doit coïncider avec celle entre les impulsions 1 et 3. Bien entendu, dans ce cas, les impulsions 11 et 12 n'existent pas.

Bien entendu, si le signal (e) comporte d'abord une impulsion négative, puis une impulsion positive, le signal (f) doit comporter d'abord une impulsion positive, puis une impulsion négative. Il faut et il suffit que les impulsions 7 et 8 du signal (f) soient de polarités opposées par rapport aux impulsions 1 et 3 du signal (e) et que la transition entre les impulsions 7 et 8 ait lieu pendant le changement de polarité entre les impulsions 1 et 3.

Ainsi, grâce à l'invention, il suffit d'envoyer aux lignes non sélectionnées un signal de faible amplitude (I/3), ce qui empêche l'écriture par ces têtes et permet de ne pas modifier l'état du support magnétique.

## Revendications

1. Procédé d'adressage de têtes élémentaires d'une tête matricielle d'enregistrement sur support magnétique adressée par un réseau de conducteurs disposés en lignes et en colonnes, utilisant d'une part un signal de sélection de colonne (a) comportant deux impulsions successives de même amplitude d'environ 2I/3, I étant le courant d'excitation maximal des circuits magnétiques des têtes élémentaires, mais de polarités inverses, ledit procédé utilisant d'autre part des signaux de sélection de ligne (b,d) comprenant chacun un palier d'amplitude d'environ I/3 existant au moins pendant la durée des impulsions du signal de sélection de colonne (a), la polarité desdites impulsions de sélection ligne dépendant de l'information à inscrire, ledit procédé étant caractérisé en ce que les lignes non sélectionnées reçoivent un signal comprenant deux impulsions successives d'amplitude d'environ I/3 et de polarités inverses, chacune de ces impulsions étant associée à une impulsion du signal de sélection de colonne (a), la durée et la polarité desdites impulsions du signal des lignes non sélectionnées étant telles que la somme dudit signal de sélection de colonne (a) et du signal des lignes non sélectionnées ne dépasse pas environ I/3 en valeur absolue.

2. Procédé selon la revendication 1, caractérisé par le fait qu'un signal de sélection de colonne (e) est une impulsion double comportant une première impulsion simple (1) d'amplitude +2I/3, un palier nul (2), et une deuxième impulsion simple (3) d'amplitude -2I/3, qu'un signal de sélection de ligne est une impulsion d'amplitude +I/3 (4) ou -I/3 (5), et que les lignes non sélectionnées reçoivent un signal (f) bipolaire comportant une première impulsion simple (7) d'amplitude -I/3 et une deuxième impulsion simple (8) d'amplitude +I/3.

3. Procédé selon la revendication 2, caractérisé par le fait que dans le signal envoyé aux lignes non sélectionnées le premier front de la double impulsion arrive (t′0) avant le premier front (t0) de l'impulsion double de sélection de colonne, et que son dernier front arrive (t′3) après le dernier front (t3) de l'impulsion double de sélection de colonne.

4. Procédé selon la revendication 3, caractérisé par le fait que dans le signal envoyé aux lignes non sélectionnées, la transition entre les deux impulsions simples (t′1) se produit pendant le palier (2) de l'impulsion double de sélection de colonne.

## Patentansprüche

1. Verfahren zum Adressieren der Elementarmagnetköpfe eines matrizenförmigen Mehrspurmagnetkopfs für Magnetdatenträger, nach dem letzterer über ein Netz von zeilen- und spaltenweise angeordneten Leitern adressiert wird, wobei einerseits ein Signal zum Spaltenmarkieren (a) mit zwei aufeinanderfolgenden Impulsen gleicher Amplitude von ca. 2I/3, jedoch umgekehrter Polarität - wobei I der maximale Erregerstrom der Magnetkreise der Elementarmagnetköpfe ist - und andererseits Signale zum Zeilenmarkieren (b, d) erzeugt werden, von denen jedes eine Amplitudenhöhe von ca. I/3 beinhaltet und die mindestens solange anliegen, wie die Spaltenmarkieramplitude (a) dauert und wobei die Polarität der Zeilenmarkiersignale von den einzulesenden Daten abhängt, dadurch gekennzeichnet, daß die nicht markierten Zeilen ein Signal mit zwei aufeinanderfolgenden Impulsen mit einer Amplitudenhöhe von ca. I/3 und entgegengesetzter Polarität erhalten, wobei jeder dieser beiden Impulse einem Spaltenmarkiersignal (a) zugeordnet ist und die Dauer und Polarität dieser beiden Impulse des Signals der nicht markierten Zeilen derart definiert sind, daß die Summe des Spaltenmarkiersignals (a) und des Signals der nicht markierten Zeilen als Absolutwert nicht über ca. I/3 liegt.

2. Verfahren nach Patentanspruch 1, dadurch gekennzeichnet daß ein Spaltenmarkiersignal (a) ein Doppelimpulssignal ist, das einen ersten Einfachimpuls (1) mit der Amplitude +2I/3, danach eine Phase (2) mit dem Wert Null sowie einen zweiten Einfachimpuls (3) mit der Amplitude -2I/3 beinhaltet, daß ein Zeilenmarkiersignal einen Impuls mit der Amplitude +I/3 (4) oder -I/3 (5) beinhaltet und die nicht zu markierenden Zeilen ein zweipoliges Signal (f) mit einem ersten Einfachimpuls (7) der Amplitude -I/3 und einem zweiten Einfachimpuls (8) der Amplitude +I/3 erhalten.

3. Verfahren nach Patentanspruch 2, dadurch gekennzeichnet, daß bei dem an die nicht zu markierenden Zeilen übertragene Signal der Zeitpunkt (t′0) der steigenden Flanke des Doppelimpulses vor dem Zeitpunkt (t0) des Doppelimpulses zum Spaltenmarkieren liegt und daß der Zeitpunkt seiner fallenden Flanke (t′3) nach dem Zeitpunkt (t3) des Doppelimpulses zum Spaltenmarkieren liegt.

4. Verfahren nach Patentanspruch 3, dadurch gekennzeichnet, daß bei dem an die nicht zu markierenden Zeilen übertragene Signal der Übergang zwischen den beiden Einfachimpulsen (t′1) sich während der Phase (2) mit dem Wert Null des Doppelimpulses zum Spaltenmarkieren ereignet.

## Claims

1. Process for addressing elementary heads in a matrix head that records on a magnetic medium addressed by a network of conductors set out in rows and columns, using firstly a column selection signal including two successive pulses with opposite polarities but the same amplitude of about 2I/3, where I is the maximum excitation current in elementary head magnetic circuits, the said process using firstly row selection signals (b, d) each of which has a constant amplitude of about I/3 continuing for at least the duration of the column selection signal pulses (a), the polarity of the said row selection pulses depending on the information to be written, wherein in the said process, unselected rows will receive a signal including two successive pulses with opposite polarities and an amplitude of about I/3, each of these pulses being associated with a column selection signal pulse (a), the duration and the polarity of the said signal pulses for unselected rows being such that the absolute value of the sum of the said column selection signal and unselected rows signal does not exceed I/3.

2. Process according to claim 1, wherein the fact that a column selection signal (e) is a double pulse consisting of a first single pulse (1) with an amplitude of +2I/3, a zero constant value (2) and a second single pulse (3) with an amplitude of -2I/3, and a row selection signal is a pulse with amplitude +I/3 (4) or -I/3 (5), and that unselected rows receive a bipolar signal (f) including a first single pulse (7) with amplitude -I/3, and a second single pulse (8) with amplitude +I/3.

3. Process according to claim 2, wherein the first front of the double pulse in the signal sent to unselected rows arrives (t′0) before the first front (t0) of the double column selection pulse, and its last front (t′3) arrives after the last front (t3) of the double column selection pulse.

4. Process according to claim 3, wherein the transition between the two single pulses (t′1) in the signal sent to unselected rows occurs during the constant part (2) of the double column selection pulse.
